# FASCICULE DE BREVET EUROPEEN

(11) **EP 2 541 128 B1**
(45) Date de publication et mention de la délivrance du brevet: **27.01.2021**
(21) Numéro de dépôt: 12173251.5
(22) Date de dépôt: 22.06.2012
(51) Int. Cl.: F21S 41/24, F21S 43/14, F21V 8/00

(54) **Dispositif optique et système de signalisation et/ou d'éclairage**
Optische Vorrichtung und System zur Signalisierung und/oder Beleuchtung
Optical device and signalling and / or lighting system

(30) Priorité: 30.06.2011 FR 1155857
(43) Date de publication de la demande: 02.01.2013
(73) Titulaire: VALEO VISION, 93012 Bobigny Cedex (FR)
(72) Inventeur: De Lamberterie, Antoine, 75019 PARIS (FR)

(56) Documents cités:
- EP-A2- 2 071 228
- DE-A1-102005 021 079
- DE-A1-102007 005 779
- FR-A1- 2 934 353
- FR-A1- 2 947 325
- JP-A- 2006 236 588

## Description

La présente invention est relative notamment à un dispositif optique et à un système d'éclairage et/ou de signalisation.

Une application préférée concerne l'industrie automobile, pour l'équipement de véhicule.

Dans ce domaine, les techniques les plus conventionnelles consistent à réaliser séparément les différentes fonctions d'éclairage ou de signalisation souhaitées telles que : feu de route, feu de code, clignotant de changement de direction ou encore par exemple éclairage de jour également dénommée par son acronyme DRL (de l'anglais Day Running Light).

Dans le but général d'améliorer l'encombrement et le rendu visuel des systèmes lumineux, il existe dans l'état de la technique, des modules optiques conjuguant plusieurs fonctions d'éclairage et/ou de signalisation. Ainsi, le document FR-A-2 947 325 divulgue un dispositif optique doté d'au moins deux sources lumineuses réalisant chacune une fonction, et d'un guide de lumière disposant d'une face de sortie commune pour les rayons lumineux issus des deux sources. Le guide de lumière est commun aux deux sources ce qui n'est pas exempt d'inconvénients :
- soit les sources lumineuses (par exemple de DELs, diodes électroluminescentes) sont placées côte à côte en regard d'une face d'entrée du guide qui est alors en forme de nappe et l'axe d'entrée du guide de lumière est placé entre les deux sources lumineuses. L'efficacité globale du dispositif, c'est-à-dire la puissance lumineuse de la lumière sortant du guide par rapport à la puissance lumineuse de la lumière entrant dans le guide, n'est pas optimale. On constate aussi que l'homogénéité de l'éclairement sur la face de sortie n'est pas optimale, surtout si le guide de lumière est fortement galbé ;
- soit un système de couplage des sources lumineuses est mis en place dans une partie amont du chemin des rayons, système de couplage induisant dans la pratique des pertes conséquentes. Par exemple, des pertes par absorption de l'ordre de 50% sont fréquentes pour des longueurs de guide cylindrique servant au couplage de l'ordre de 300 mm.

L'invention permet de résoudre tout ou partie des inconvénients des techniques actuelles.

Elle concerne en particulier un dispositif optique comportant une portion de sortie dotée d'une face de sortie et agencé pour émettre, par la face de sortie, des rayons lumineux issus d'une première et d'une deuxième source lumineuse.

Selon l'invention, ce dispositif est tel qu'il comporte un premier guide de lumière configuré pour propager les rayons lumineux issus de la première source lumineuse vers la portion de sortie et un deuxième guide de lumière, distinct du premier guide de lumière, configuré pour propager les rayons lumineux issus de la deuxième source vers la portion de sortie.

Ainsi, les fonctions d'éclairage et/ou de signalisation dédiées aux deux sources sont réalisées par une même surface de sortie du dispositif mais, pour autant, les chemins des rayons lumineux issus de chacune des sources sont différenciés, par la mise en oeuvre de guides de lumière distincts. On peut alors concevoir un guide de lumière bien approprié pour chaque fonction.

Selon l'invention, la portion de sortie est intégrée au premier guide de lumière. Ainsi, une continuité de matière est réalisée pour produire de manière intégrale le premier guide et la portion de sortie. Selon l'invention, la portion de sortie comporte un prolongement du premier guide de lumière orienté suivant l'épaisseur du premier guide de lumière. Suivant un aspect, la portion de sortie est simplement une extrémité aval du premier guide dans laquelle a été formé un prolongement orienté suivant l'épaisseur du premier guide de lumière.

On peut aussi avantageusement faire en sorte que le prolongement définisse une surface d'entrée de rayons lumineux sortant d'une surface de sortie du deuxième guide de lumière. Ainsi, le deuxième guide de lumière peut être placé à l'arrière du prolongement suivant la direction des rayons lumineux, les rayons issus des deux sources se rejoignant uniquement dans la portion de sortie, laissant toute latitude au concepteur pour adapter chaque guide de lumière à la fonction qui lui est attribuée.

D'autres caractéristiques optionnelles qui peuvent être mises en oeuvre de façon combinée ou alternative sont indiquées ci-après :
- la surface d'entrée est située à l'arrière du prolongement relativement à la face de sortie ;
- la surface de sortie du deuxième guide de lumière a une hauteur inférieure ou égale à la hauteur de la surface d'entrée, suivant l'épaisseur du premier guide de lumière ;
- la surface d'entrée comporte un relief de déviation des rayons lumineux sortant du deuxième guide de lumière ;
- le relief de déviation comprend une pluralité de stries parallèles orientées suivant l'épaisseur du premier guide de lumière ;
- le premier guide de lumière comporte une zone de propagation principale en forme de nappe ;
- le deuxième guide de lumière est un guide cylindrique ;
- la direction longitudinale du guide cylindrique est sensiblement différente de la direction de propagation des rayons lumineux dans la zone de propagation principale ;
- la face de sortie comporte un relief de déviation des rayons traversant la portion de sortie ;
- le relief de la face de sortie comprend une pluralité de stries parallèles orientées suivant l'épaisseur du premier guide de lumière ;
- le relief de la face de sortie comprend une pluralité de stries parallèles orientées transversalement à l'épaisseur du premier guide de lumière.

L'invention a aussi trait à un système d'éclairage et/ou de signalisation comportant au moins une première et une deuxième sources lumineuses et un dispositif optique selon l'invention.

Suivant une possibilité avantageuse, le deuxième guide de lumière est un guide cylindrique et dans lequel la deuxième source lumineuse comporte une paire de diodes électroluminescentes, chacune à une extrémité du guide cylindrique. A titre optionnel, la deuxième source lumineuse est configurée pour émettre un flux d'éclairage de jour.

Par ailleurs, une possibilité est que la première source lumineuse est configurée pour émettre un flux de feu clignotant de changement de direction.

L'invention est aussi relative à un véhicule équipé d'au moins un système tel qu'introduit ci-dessus.

D'autres caractéristiques, buts et avantages de la présente invention apparaîtront à la lecture de la description détaillée qui suit, et en regard des dessins annexés donnés à titre d'exemples non limitatifs et sur lesquels :
- la figure 1 est une vue en coupe transversale d'un dispositif selon l'invention.
- La figure 2 montre plus en détail la coopération entre deux guides de lumière selon l'invention.
- La figure 3 présente une variante de l'invention en coupe longitudinale.
- La figure 4 illustre une autre variante en coupe longitudinale.
- Les figures 5 et 6 donnent deux illustrations en perspective d'un exemple de dispositif selon l'invention.

D'une manière générale, la présente invention peut utiliser des sources lumineuses du type diodes électroluminescentes encore communément appelées LEDs. Notamment, ces LEDs peuvent être dotées d'au moins une puce apte à émettre une lumière d'intensité et de couleur ajustées à la fonction d'éclairage et/ou de signalisation à réaliser. Par exemple, une première source lumineuse peut comporter au moins une LED pour opérer un éclairage en lumière ambre pour une fonction de feu clignotant d'indication de changement de direction. Par ailleurs une deuxième source de lumière peut comporter au moins une LED de lumière blanche pour opérer une fonction d'éclairage de jour. Le nombre de LEDs n'est cependant pas limitatif de l'invention, ni même le nombre de fonctions susceptibles d'être mises en œuvre par le système global de l'invention. Par ailleurs, le terme source lumineuse s'entend ici d'un ensemble d'au moins une source élémentaire telle une LED apte à produire un flux conduisant à générer en sortie du dispositif de l'invention un flux de sortie remplissant la fonction souhaitée. A titre d'exemple préféré, la deuxième source lumineuse de l'invention comprend une paire de LEDs chacune disposée à une extrémité d'un deuxième guide lumineux qui sera décrit en détail ci-après.

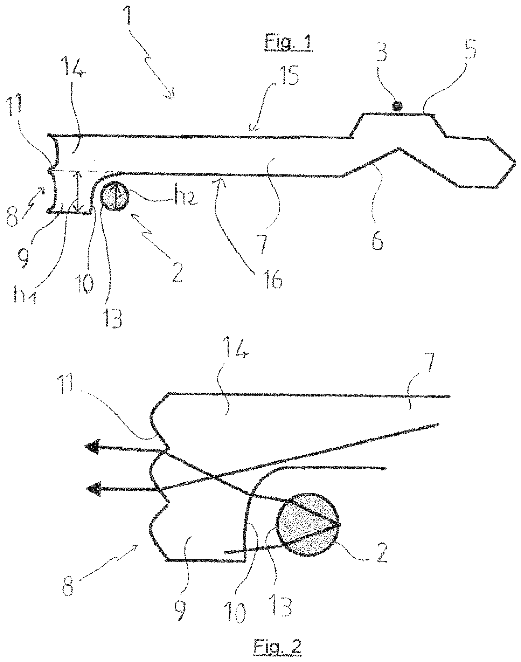

Le dispositif optique ici présenté tire avantageusement profit des techniques existantes en ce qui concerne des guides de lumière permettant la propagation de rayons lumineux émis par une source de lumière à travers le milieu constituant le guide. Par exemple, le premier et le deuxième guides de lumière 1, 2 représentés particulièrement aux figures 1 et 2 peuvent être réalisés à partir de matériaux tels du PMMA (polyméthacrylate de méthyle), PC (polycarbonate), silicone ou autre et avec un indice de réfraction préféré compris entre 1,49 et 1,59.

Un mode de réalisation préféré d'un premier guide de lumière 1 est représenté en figure 1 en coupe transversale c'est-à-dire suivant la direction de propagation des rayons dans une zone de propagation principale 7. Le guide 1 comporte une face d'entrée 5 par laquelle les rayons lumineux issus d'une première source lumineuse 3 sont admis. A partir de la face d'entrée 5, les rayons suivent un chemin d'abord orienté principalement suivant l'épaisseur du guide de lumière 1 et subissent au moins une réflexion sur une surface de réflexion 6 pour diriger les rayons réfléchis dans une zone de propagation principale 7. Au moins la zone de propagation principale 7 peut présenter la forme d'une nappe de guidage, c'est-à-dire d'un guide sensiblement bidimensionnel (avec une plus faible épaisseur au regard de la longueur) pouvant être incurvé pour adopter un galbe donné.

La zone de propagation 7 est délimitée verticalement par une face de guidage supérieure 15 et une face de guidage inférieure 16. Les deux faces de guidage 15 et 16 sont avantageusement parallèles et espacées de manière que la zone 7 présente une épaisseur verticale constante qui est faible par rapport à ses dimensions longitudinale et transversale.

La présente invention laisse toute liberté de forme et de dimensions pour la nappe et une grande liberté de conception du premier guide de lumière 1 pour l'adapter à la fonction à réaliser par l'intermédiaire de la première source lumineuse 3.

La zone de propagation principale 7 du premier guide 1 est prolongée par une portion de sortie 14 présentée dans un premier mode de réalisation en figure 1 et suivant une variante en figure 2. Dans le cas de la figure 1, la portion de sortie 14 présente une surface externe apte à constituer la face de sortie 8 des rayons lumineux issus du dispositif de l'invention. Dans le cas représenté, la face de sortie 8 comporte une portion de son épaisseur dans la continuité de l'épaisseur de la zone de propagation principale 7 du premier guide de lumière 1. Une autre partie de son épaisseur forme une excroissance sensiblement orientée suivant l'épaisseur de la zone de propagation principale 7 du premier guide 1. Est ainsi constitué un prolongement 9 qui est, dans le cas des figures, orienté vers le bas, à l'opposé de la face d'entrée 5 des rayons de la source lumineuse 3. Ce cas n'est cependant pas limitatif et l'on peut aussi bien constituer le prolongement 9 orienté vers le haut et en concordance avec le côté où se situe la face d'entrée 5 du premier guide 1.

Le prolongement 9 débute à un niveau de hauteur correspondant au niveau d'une des faces de guidage 15, 16 - ici la face 16 - et se poursuit dans la direction opposée à l'autre face de guidage - ici la face 15.

En figure 1, le début du prolongement est schématisé en pointillés.

Le prolongement 9 de la portion de sortie 14 produit un espace situé à l'arrière de la face de sortie 8 relativement à la direction de propagation des rayons, espace dans lequel peut être intégré un deuxième guide de lumière 2 tel que dans le cas illustré. Dans cette situation, le deuxième guide de lumière 2 émet des rayons lumineux par une surface de sortie 13 et aptes à entrer dans la portion de sortie 14 par une surface d'entrée 10 située au niveau du prolongement 9 et avantageusement à l'arrière de la portion de sortie 14 relativement à la face de sortie 8. Le cheminement des rayons lumineux issus du premier guide de lumière 1 et du deuxième guide de lumière 2 est particulièrement visible en figure 2.

Avantageusement, la hauteur h1 du prolongement 9 (c'est-à-dire sa dimension suivant l'épaisseur de la zone de propagation principale 7) est supérieure ou égale à la hauteur h2 de la surface de sortie 13 du deuxième guide de lumière 2. Par exemple, cette hauteur h1 est égale à 7 mm. Par ailleurs, on peut donner à la surface d'entrée 10 des rayons issus du deuxième guide de lumière 2 la forme appropriée pour diriger ces rayons dans la direction souhaitée pour produire le faisceau de sortie du dispositif approprié à la fonction souhaitée. A titre d'exemple, la surface d'entrée 10 présente une courbure telle que visible aux figures 1 et 2 dans un plan transversal à la direction principale de propagation dans la zone de propagation principale 7.

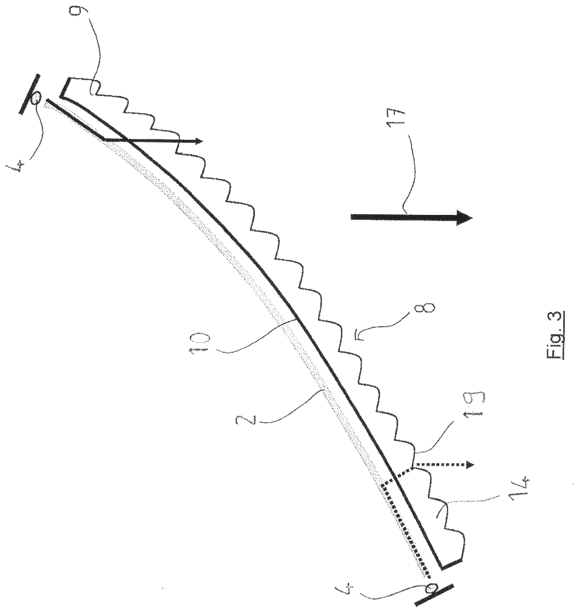

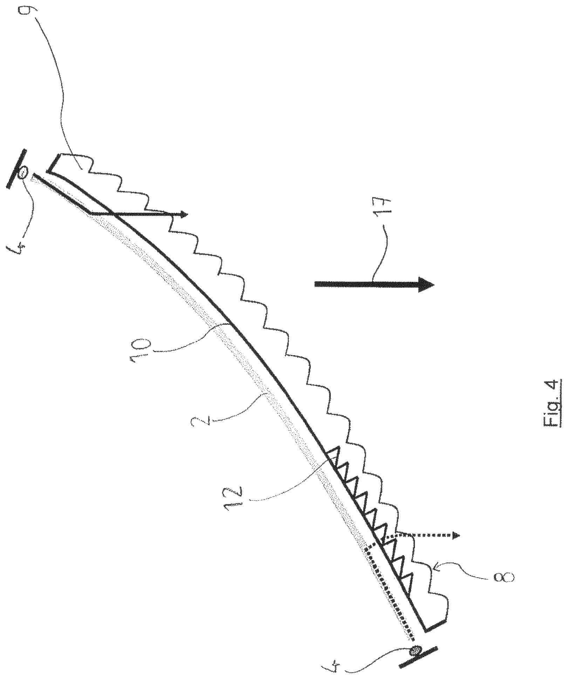

A titre préféré, le deuxième guide de lumière 2 est un guide de type cylindrique, c'est-à-dire constitué par un corps essentiellement allongé avantageusement de section sensiblement circulaire bien que ce ne soit pas limitatif de l'invention. Une section circulaire est révélée aux figures 1 et 2. Des sections approchantes notamment ovales peuvent satisfaire à la définition de guides cylindriques. Tel que cela est représenté aux figures 3 et 4 l'emploi de ce type de guides permet de disposer une partie de la deuxième source lumineuse 4 à une extrémité du guide 2 et avantageusement de disposer deux sources élémentaires de la deuxième source 4 chacune à une extrémité du guide 2. L'emploi d'un guide cylindrique comme le deuxième guide de lumière 2 permet de l'orienter sensiblement transversalement à la nappe constituant la zone de propagation principale 7 du premier guide 1. Cela permet aussi d'intégrer le guide 2 dans la hauteur du prolongement 9. Avantageusement, le profil longitudinal du deuxième guide de lumière 2 suit le profil de la surface d'entrée. Un exemple de ces profils sensiblement parallèles ressort des figures 3 et 4.

La face de sortie 8 peut présenter des reliefs adaptés à former une déviation des faisceaux issus de chacune des sources. Dans le cas de la figure 1, les reliefs sont constitués par des stries 11 orientées sensiblement suivant la direction longitudinale du bord du guide 1. Dans la figure 1, ces stries longitudinales forment des concavités rentrant dans la portion de sortie 14. A titre de variante, la figure 2 montre des stries longitudinales 11 de profil convexe sur la face de sortie 8. Dans ces deux illustrations, les stries longitudinales 11 définissent respectivement une convexité et une concavité sensiblement galbées. Ce cas n'est cependant pas limitatif et d'autres profils peuvent être mis en oeuvre notamment des profils prismatiques. Ces types de reliefs permettent d'étaler le flux sortant et augmentent son homogénéité.

On a représenté en figure 3 un exemple de réalisation de l'invention permettant de visualiser le chemin suivi par des rayons issus de deux sources élémentaires constituant la deuxième source lumineuse 4. Plus particulièrement, un profil de la face de sortie 8 y est présenté avec une pluralité de reliefs ici sous forme de stries 19 dirigées suivant l'épaisseur de la zone principale 7, c'est-à-dire s'étendant transversalement à la direction longitudinale du guide 1. Ces stries transverses 19 permettent une déviation des rayons de la source 4 de sorte à les redresser si nécessaire. Plus précisément, telle que représentée en figure 3, la deuxième source lumineuse 4 comporte deux sources élémentaires, chacune à une extrémité du guide cylindrique 2. Au regard de l'axe optique 17 souhaité pour la sortie du flux réalisant la fonction photométrique dédiée à la source 4, l'orientation des rayons issus de la partie située vers le haut à droite de la figure du guide optique ne pose pas de difficulté. Par contre, l'orientation des rayons issus de la partie du guide 2 situés vers la partie gauche en bas de la figure 3 nécessite un redressement. Ce redressement est avantageusement produit grâce à la portion de sortie 14 de l'invention, en définissant un profil de face de sortie 8 adapté à une déviation conséquente des rayons sortants. Le chemin lumineux en pointillés représente ce redressement.

En variante, non représentée ici, les stries transverses 19 peuvent présenter un profil convexe.

La face de sortie 8 peut comporter une combinaison de stries longitudinales 11 et/ou transverses 19, ces stries 11 et/ou 19 présentant, chacune et indépendamment des autres stries 11 et/ou 19, un profil prismatique, comme par exemple un de ceux précités.

En variante, la face de sortie 8 peut être dépourvue de stries longitudinales 11 et/ou transverses 19, et peut notamment être lisse.

La figure 4 représente une autre variante de l'invention dans laquelle la surface d'entrée 10 de la portion de sortie 14 comporte un relief de déviation des rayons lumineux sortant du deuxième guide de lumière 2. Ce relief peut être formé de manière alternative au relief de la face de sortie 8 ou, comme c'est le cas de l'illustration, en complément. Cette combinaison de reliefs permet un redressement efficace des rayons issus de la deuxième source lumineuse 4. Dans le cas illustré, le relief formé sur la surface d'entrée 10 de la portion de sortie 14 correspond à une pluralité de stries 12 orientées suivant l'épaisseur de la zone de propagation principale 7 (soit encore la hauteur de la portion de sortie 14). A titre non limitatif, on a représenté des stries 12 sous forme prismatique. Dans le cas d'utilisation combinée de reliefs sur la face de sortie 8 et sur la surface d'entrée 10, ces reliefs se complètent efficacement pour le redressement et l'étalement des rayons vers l'axe optique 17. On notera qu'il n'est pas systématique de devoir réaliser des reliefs sur l'intégralité de la longueur de la surface d'entrée 10. Notamment, la présence de reliefs utiles au redressement des rayons se justifie principalement sur la zone correspondant à la partie du guide 2 pour laquelle les rayons doivent être le plus redressés, notamment avec un redressement supérieur à 90°. Les formes et dimensions de l'ensemble des reliefs décrits ci-dessus peuvent par ailleurs évoluer le long de la portion de sortie 14.

On notera que la portion de sortie 14 constitue dans le cas représenté une continuité du premier guide de lumière 1. La largeur de cette zone n'est pas limitée par l'invention. D'une façon générale, une largeur de l'ordre de 5 à 30 millimètres peut donner satisfaction et plus précisément une largeur de 10 à 15 millimètres conviendra dans la plupart des cas.

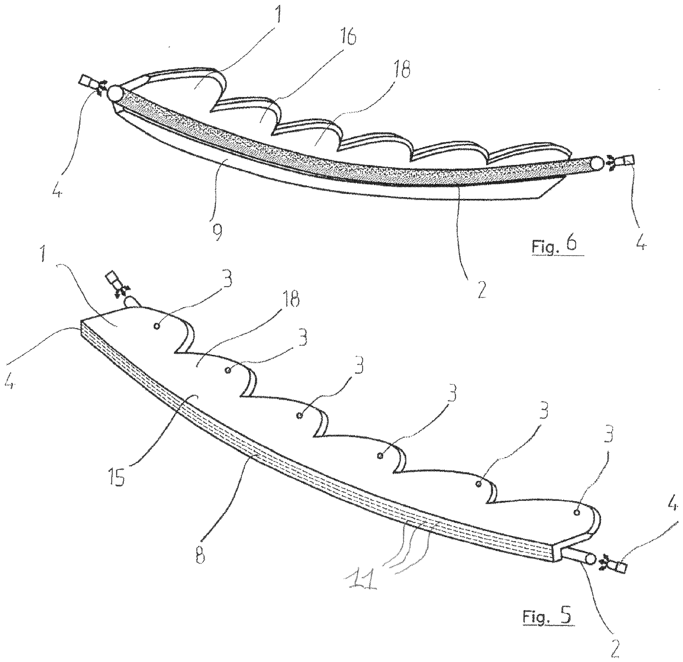

Les figures 5 et 6 permettent d'illustrer la globalité du dispositif vu en perspective.

La figure 5 est une vue de l'invention par la face 15 du premier guide 1.

Sont repérées deux sources élémentaires, à chaque extrémité du dispositif, pour réaliser la source 4. Le premier guide 1 a ici la forme d'une nappe de guidage, comme dans les cas précédents. Il coopère avec pluralité de sources élémentaires constituant la première source 3. Chaque source élémentaire est par exemple au moins une diode électroluminescente. Elles sont, dans l'illustration de la figure 5, régulièrement espacées suivant la dimension longue du premier guide 1 et sont localisées à l'arrière du premier guide 1, à l'opposé de la face de sortie 8, comme c'était déjà visible en figure 1. La face de sortie 8 présente des stries longitudinales 11, s'étendant le long de l'intégralité de la face de sortie 8. La face de sortie 8 est dépourvue de stries transverses.

Dans le mode de réalisation des figures 5 et 6, chaque source élémentaire de la première source 3 est située dans une zone en forme de lobe 18 du premier guide 1. La tranche du premier guide 1 opposée à la face de sortie 8 a ainsi un profil longitudinal pourvu d'ondulations. Les lobes 18 sont aussi visibles en figure 6, par la face 16 du premier guide 1. Cette figure révèle en outre le deuxième guide 2 sur toute sa longueur, à l'arrière du prolongement 9. Ce dernier présente par ailleurs dans cette variante une largeur allant croissant depuis une extrémité longitudinale du dispositif, vers l'autre extrémité.

L'invention n'est pas limitée aux modes de réalisation décrits mais s'étend à tout mode de réalisation conforme à son esprit.

## Revendications

1. Dispositif optique comportant une portion de sortie (14) dotée d'une face de sortie (8) et agencé pour émettre, par la face de sortie (8), des rayons lumineux issus d'une première source lumineuse (3) et d'une deuxième source lumineuse (4), le dispositif comportant :
- un premier guide de lumière (1) configuré pour propager les rayons lumineux issus de la première source lumineuse (3) vers la portion de sortie (14) ;
- un deuxième guide de lumière (2), distinct du premier guide de lumière (1) et configuré pour propager les rayons lumineux issus de la deuxième source (4) vers la portion de sortie (14), et la portion de sortie (14) étant intégrée au premier guide de lumière (1),
ce dispositif étant **caractérisé par le fait que** la portion de sortie (14) comporte un prolongement (9) du premier guide de lumière (1) orienté suivant l'épaisseur du premier guide de lumière (1).

2. Dispositif selon la revendication précédente dans laquelle le prolongement (9) définit une surface d'entrée (10) de rayons lumineux sortant d'une surface de sortie du deuxième guide de lumière (13).

3. Dispositif selon la revendication précédente dans lequel la surface d'entrée (10) est située à l'arrière du prolongement (9) relativement à la face de sortie (8).

4. Dispositif selon la revendication précédente dans lequel la surface de sortie du deuxième guide de lumière (13) a une hauteur inférieure ou égale à la hauteur de la surface d'entrée, suivant l'épaisseur du premier guide de lumière (1).

5. Dispositif selon l'une des revendications précédentes dans lequel le premier guide de lumière (1) comporte une zone de propagation principale (7) en forme de nappe.

6. Dispositif selon l'une des revendications précédentes dans lequel le deuxième guide de lumière (2) est un guide cylindrique.

7. Dispositif selon les deux revendications précédentes en combinaison dans lequel la direction longitudinale du guide cylindrique est sensiblement perpendiculaire à la direction de propagation des rayons lumineux dans la zone de propagation principale (7).

8. Dispositif selon l'une des revendications précédentes dans lequel la face de sortie (8) comporte un relief de déviation des rayons traversant la portion de sortie.

9. Dispositif selon la revendication précédente dans lequel le relief de la face de sortie (8) comprend une pluralité de stries (11) parallèles orientées suivant l'épaisseur du premier guide de lumière (1).

10. Dispositif selon la revendication 9 dans lequel le relief de la face de sortie (8) comprend une pluralité de stries (11) parallèles orientées transversalement à l'épaisseur du premier guide de lumière (1).

11. Système d'éclairage comportant une première source lumineuse (3), une deuxième source lumineuse (4) et un dispositif selon l'une des revendications précédentes.

12. Système selon la revendication précédente dans lequel le deuxième guide de lumière (2) est un guide cylindrique et dans lequel la deuxième source lumineuse (4) comporte une paire de diodes électroluminescentes, chacune à une extrémité du guide cylindrique.

13. Système selon l'une des deux revendications précédentes dans lequel la première source lumineuse (3) est configurée pour émettre un flux de feu clignotant de changement de direction.

14. Système selon l'une des trois revendications précédentes dans lequel la deuxième source lumineuse (4) est configurée pour émettre un flux d'éclairage de jour.

## Patentansprüche

1. Optische Vorrichtung, welche einen mit einer Austrittsseite (8) versehenen Austrittsabschnitt (14) aufweist und dazu eingerichtet ist, über die Austrittsseite (8) Lichtstrahlen auszusenden, die von einer ersten Lichtquelle (3) und von einer zweiten Lichtquelle (4) ausgehen, wobei die Vorrichtung aufweist:
- einen ersten Lichtleiter (1), der dafür ausgelegt ist, die von der ersten Lichtquelle (3) ausgehenden Lichtstrahlen zu dem Austrittsabschnitt (14) zu leiten;
- einen zweiten Lichtleiter (2), der von dem ersten Lichtleiter (1) verschieden ist und dafür ausgelegt ist, die von der zweiten Lichtquelle (4) ausgehenden Lichtstrahlen zu dem Austrittsabschnitt (14) zu leiten, und
wobei der Austrittsabschnitt (14) in den ersten Lichtleiter (1) integriert ist,
wobei diese Vorrichtung **dadurch gekennzeichnet ist, dass** der Austrittsabschnitt (14) eine Verlängerung (9) des ersten Lichtleiters (1) aufweist, die entlang der Dicke des ersten Lichtleiters (1) ausgerichtet ist.

2. Vorrichtung nach dem vorhergehenden Anspruch, wobei die Verlängerung (9) eine Eintrittsfläche (10) für Lichtstrahlen definiert, die aus einer Austrittsfläche des zweiten Lichtleiters (13) austreten.

3. Vorrichtung nach dem vorhergehenden Anspruch, wobei sich die Eintrittsfläche (10) bezüglich der Austrittsseite (8) hinten an der Verlängerung (9) befindet.

4. Vorrichtung nach dem vorhergehenden Anspruch, wobei die Austrittsfläche des zweiten Lichtleiters (13) eine Höhe aufweist, die kleiner oder gleich der Höhe der Eintrittsfläche ist, in Richtung der Dicke des ersten Lichtleiters (1) gemessen.

5. Vorrichtung nach einem der vorhergehenden Ansprüche, wobei der erste Lichtleiter (1) einen Hauptausbreitungsbereich (7) in Form einer Bahn hat.

6. Vorrichtung nach einem der vorhergehenden Ansprüche, wobei der zweite Lichtleiter (2) ein zylindrischer Lichtleiter ist.

7. Vorrichtung nach den zwei vorhergehenden Ansprüchen in der Kombination, wobei die Längsrichtung des zylindrischen Lichtleiters im Wesentlichen senkrecht zur Ausbreitungsrichtung der Lichtstrahlen im Hauptausbreitungsbereich (7) ist.

8. Vorrichtung nach einem der vorhergehenden Ansprüche, wobei die Austrittsseite (8) ein Relief zur Ablenkung der Strahlen aufweist, die den Austrittsabschnitt durchqueren.

9. Vorrichtung nach dem vorhergehenden Anspruch, wobei das Relief der Austrittsseite (8) mehrere parallele Rippen (11) umfasst, die in Richtung der Dicke des ersten Lichtleiters (1) ausgerichtet sind.

10. Vorrichtung nach Anspruch 9, wobei das Relief der Austrittsseite (8) mehrere parallele Rippen (11) umfasst, die quer zur Dicke des ersten Lichtleiters (1) ausgerichtet sind.

11. Beleuchtungssystem, welches eine erste Lichtquelle (3), eine zweite Lichtquelle (4) und eine Vorrichtung nach einem der vorhergehenden Ansprüche aufweist.

12. System nach dem vorhergehenden Anspruch, wobei der zweite Lichtleiter (2) ein zylindrischer Lichtleiter ist und wobei die zweite Lichtquelle (4) ein Paar Leuchtdioden aufweist, die jeweils an einem Ende des zylindrischen Lichtleiters angeordnet sind.

13. System nach einem der zwei vorhergehenden Ansprüche, wobei die erste Lichtquelle (3) dafür ausgelegt ist, einen Lichtstrom einer Blinkleuchte zur Fahrtrichtungsanzeige auszusenden.

14. System nach einem der drei vorhergehenden Ansprüche, wobei die zweite Lichtquelle (4) dafür ausgelegt ist, einen Lichtstrom des Tagfahrlichts auszusenden.

## Claims

1. Optical device comprising an exit portion (14) provided with an exit face (8) and arranged to emit, through the exit face (8), light rays coming from a first light source (3) and from a second light source (4), the device comprising:
- a first light guide (1) configured to propagate the light rays coming from the first light source (3) towards the exit portion (14);
- a second light guide (2), distinct from the first light guide (1) and configured to propagate the light rays coming from the second source (4) towards the exit portion (14), and
the exit portion (14) being integrated into the first light guide (1), this device being **characterized by** the fact that the exit portion (14) comprises an extension (9) of the first light guide (1) oriented along the thickness of the first light guide (1).

2. Device according to the preceding claim, wherein the extension (9) defines an entrance surface (10) for light rays exiting from an exit surface of the second light guide (13).

3. Device according to the preceding claim, wherein the entrance surface (10) is located at the rear of the extension (9) relative to the exit face (8).

4. Device according to the preceding claim, wherein the exit surface of the second light guide (13) has a height that is less than or equal to the height of the entrance surface, along the thickness of the first light guide (1).

5. Device according to one of the preceding claims, wherein the first light guide (1) comprises a main propagation region (7) in the form of a sheet.

6. Device according to one of the preceding claims, wherein the second light guide (2) is a cylindrical guide.

7. Device according to the two preceding claims in combination, wherein the longitudinal direction of the cylindrical guide is substantially perpendicular to the direction of propagation of the light rays in the main propagation region (7).

8. Device according to one of the preceding claims, wherein the exit face (8) comprises a relief for deviating the rays passing through the exit portion.

9. Device according to the preceding claim, wherein the relief of the exit face (8) comprises a plurality of parallel ridges (11) oriented along the thickness of the first light guide (1).

10. Device according to Claim 9, wherein the relief of the exit face (8) comprises a plurality of parallel ridges (11) oriented transversely to the thickness of the first light guide (1).

11. Light system comprising a first light source (3), a second light source (4) and a device according to one of the preceding claims.

12. System according to the preceding claim wherein the second light guide (2) is a cylindrical guide and wherein the second light source (4) comprises a pair of light-emitting diodes, each at one end of the cylindrical guide.

13. System according to one of the two preceding claims wherein the first light source (3) is configured to emit a flashing turn-signal light flux.

14. System according to one of the three preceding claims, wherein the second light source (4) is configured to emit a daytime-running light flux.
